**Europäisches Patentamt**

**European Patent Office**

**Office européen des brevets**

(19)

(11) Publication number : **0 434 645 A1**

(12) # EUROPEAN PATENT APPLICATION

(21) Application number : **90830606.1**

(22) Date of filing : **20.12.90**

(51) Int. Cl.⁵ : **B65G 7/06, B60V 3/02, B23Q 1/26, F16C 29/02, F16C 32/06**

(30) Priority : **22.12.89 IT 2283489**

(43) Date of publication of application :
**26.06.91 Bulletin 91/26**

(84) Designated Contracting States :
**DE FR GB**

(71) Applicant : **FOTOBA INTERNATONAL S.a.s., di PIETRO ALBERTO & C.**
**Via IV Novembre, 44**
**Lessona (Vercelli) (IT)**

(72) Inventor : **Maddalon, Valter**
**Via Rosmini, 4**
**Biella (Vercelli) (IT)**

(74) Representative : **Adorno, Silvano et al**
**c/o SOCIETA' ITALIANA BREVETTI S.p.A. Via Carducci, 8**
**I-20123 Milano (IT)**

(54) **Composite foot for supporting and moving pneumatically a machine.**

(57)    A composite foot is described for supporting and moving pneumatically a machine. The foot comprises a nozzle (12) for ejecting pressurized air, fixed to the machine base (10) to which a substantially disc-shaped element (30) is associated, being connected to the nozzle (12) in a substantially swingable manner, between said disc-shaped element (30) and the machine base (10) there being provided air sealing means (38) in order that air is ejected by said nozzle (12) only toward the plane on which the machine is placed, thus generating in practice a pressurized air cushion which keeps the machine itself upraised with respect to the plane, thus allowing a quick and precise shifting thereof.

EP 0 434 645 A1

# COMPOSITE FOOT FOR SUPPORTING AND MOVING PNEUMATICALLY A MACHINE

The present invention is directed to a composite foot for supporting and pneumatically moving a machine.

It is known that in most of the technical fields it is often necessary to move a machine, a device or the like from a starting position to a plurality of successive positions according to the number and/or type of processing or operations required from said machine or device. These shifts must be very precise, since on them in fact will depend the quality of the work carried out and consequently of the products obtained.

At present these shifts of machines or generally apparatuses are accomplished by providing under their base suitable supporting means to allow such a shifting in a more or less satisfactory way.

A typical although exemplificative case for which the problem arises of shifting a machine frequently and in an extremely accurate way, is that of the dragging device for paper rolls in the photografic field, being used for photo-prints. As it is known these machines, often weighing even some tens of kilograms (about 50-70 kg), must be often moved during the image framing under the enlarger and at present the necessary shifts have been obtained by different means as stated in the following.

According to a first known solution the base of such an apparatus has been provided with four stationary feet of generally polygonal or circular shape, made of a material reducing the slide friction, such as Nylon or Delrin. By means of these feet the machine can be moved by forced slipping on the support plane and the desired position is kept thanks to the friction of the feet on said plane.

The use of fixed feet as stated above still shows remarkable drawbacks, mainly due to the fact that the feet friction on the support plane is reduced only slightly, whereby the required overall force is still considerable. Furthermore a further inconvenience is that a precise, generally micrometric positioning is very difficult to be obtained.

According to another known solution orthogonal guides are provided, slidable on spheres or rollers with magnetic locking at the desired position. The means of this second solution shows however the notable drawback of being cumbersome and expensive for most of users.

According to a further known solution, the apparatus base is provided with wheeled saddles or sliding wheels and the stop of apparatus at the desired position is obtained by means of manual or motor-driven brake. Such a solution shows the notable inconvenience of requiring the operator to have a good manual skill in controlling this shifting means, whereby the results obtained are often absolutely insatisfactory.

The object of the present invention is a composite foot for supporting a machine in general, that allows to overcome all the inconveniences of the conventional supporting means as above briefly mentioned.

According to one of the basic features of the present invention, the composite foot being the object thereof is adapted to carry out a shifting of the machine pneumatically, in particular by producing an air cushion between foot and support plane that enables an easy and precise machine shift. Once reached the desired position, the machine can be kept there by simply breaking up the compressed air flow.

According to another feature of the composite foot of the present invention it is of extremely simple, and consequently economic construction, whereby not only it does not require practically any maintenance service, but it is accessible to everybody.

Features and advantages of the composite foot according to the invention will be result clearly from the following detailed description of a non-limiting embodiment thereof, with reference to the annexed drawings wherein :

FIGURES 1-3 are diagrammatic, sectional views in longitudinal direction ot the foot according to the invention, showing three possible operating conditions thereof ;

FIGURE 4 is a diagrammatic, sectional view in longitudinal direction of the compressed air ejecting nozzle of the foot according to the invention ; and

FIGURE 5 is a plan view of the compressed air ejecting nozzle of Fig. 4.

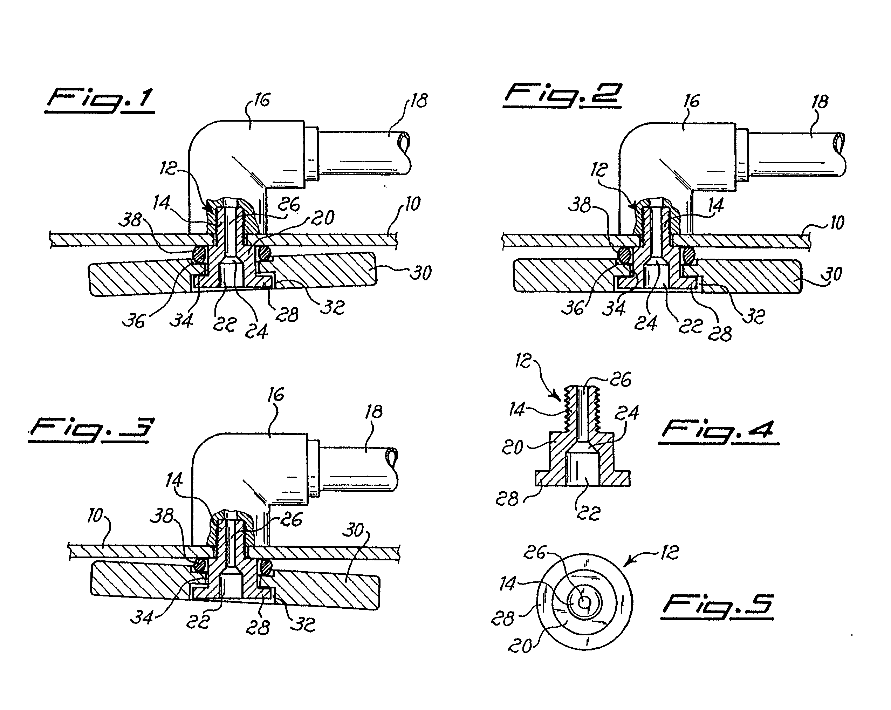

Making reference initially to figures 1-3, with 10 the machine base is designated, to which a number of feet is applied that is a function of the base 10 size and machine weight. Generally four feet are provided, at suitable positions on the base 10 and only one of them is illustrated in Figs. 1-3, since they have all the same configuration.

The foot according to the invention comprises a compressed air ejecting nozzle, generally designated 12, which has a threaded tail 14 which is screwed onto the base 10 at the end of an angular fitting 16 at the other end of which there is sealingly fixed, in whichever known manner, the end of a pipe 18 feeding compressed air. The pipe 18 is connected, together with the pipes 18 of the other feet, to a central feed source of compressed air, per se known, not shown.

Tail 14 extends itself in a substantially cylindrical body 20 having a diameter greater than tail 14. The upper face of cylindrical body 20, when tail 14 is screwed to the base 10 of the machine, abuts against the outer surface of said base 10, thus providing not only the nozzle 12 to be fixed to base 10, but also a sealing means to prevent compressed air from entering the machine. This allows to direct all the compressed air to the support plane.

The cylindrical body 20 is hollow innerly, having in fact a chamber 22 of substantially cylindrical shape which is made at the upper side with a substantially frusto-conical portion 24 for fitting to a compressed air feeding conduit 26, which is formed in the tail member 14.

In particular the chamber 22 forms an expansion chamber of the compressed air from conduit 26, suitable to enhance the generation of compressed air cushion between foot and support plane. The lower end of the substantially cylindrical body 20 is provided with an outer radial flange 28, substantially ring-shaped.

With particular reference to Figs. 1-3 the composite foot according to the invention further comprises a substantially disc-shaped body 30, having such a conformation that, when applied to the ejecting nozzle 12, it can have a substantially swinging movement with respect to the latter. This movement is of basic importance, as such a body 30 is the member through which the foot rests on the support plane.

The disc-shaped body 30 shows for this purpose, on one of its faces, a substantially cylindrical seat 32, the diameter and height of which are slightly greater than those of flange 28 of the ejecting nozzle 12. Furthermore the disc-shaped body 30 is formed with a substantially central hole 34 having a diameter of a slightly greater size than that of the body 20.

The seat 32 and central hole 34 of the disc-shaped body 30 are thereby so shaped to enable a swinging or rocking movement of the latter about the medium longitudinal axis of the ejecting nozzle 12, as shown in two illustrative examples by Figs 1 and 3.

The disc-shaped body 30 also shows, on the face opposite to the first mentioned one, a further seat 36 also of substantially cylindrical shape, which partially houses a ring 28 of substantially circular cross-section made of a resilient material such as rubber or the like, the function of which will be better explained in the following.

As can be noted, particularly by figures 1-3, the outer diameter of ring 38 is smaller than diameter of cavity 36, so that said ring 38 may have some freedom of movement in said cavity or seat. Furthermore the cross-section diameter of ring 38 is at least equal to and preferably slightly greater than the distance between the bottom of seat 36 and the outer surface of the machine base 10, whereby in any condition of use the ring 38 is always in contact with base 10 and body 30.

From the foregoing it clearly appears that one first important function of ring 38 is that of ensuring compressed air seal with respect to base 10 of the machine, so that all the flow of air under pressure fed to the ejecting nozzle 12 is directed into the expansion chamber 22, thereby below the disc-shaped body 30, thus ensuring that an air cushion is formed.

A second important function of ring 38 is that of rendering elastically swingable the disc-shaped body 30, which therefore can oscillate about the median longitudinal axis of the ejecting nozzle 12 along which-ever direction. Two of these directions are illustrated by way of example in Figs. 1 and 3, from which it can be seen that the swinging movement of the disc-shaped 30 is allowed by a consequent compression of ring 38. It is also remarkable the fact that, while a portion of ring 38 is compressed owing to oscillation of the disc-shaped body 30, the remaining portion of ring 38 remains however in contact with the outer surface of machine base 10 and the bottom of seat 36, thus providing in any case for the compressed air seal, as explained above.

The swinging movements of the disc-shaped body 30 have been provided to counterbalance possible flatness defects of the support plane of the machine which consequently remains in any case perfectly horizontal, both during the shift movement and at rest conditions.

From the foregoing clearly appear the advantages resulting from use of the foot according to the invention.

A first notable advantage derives from the fact that, when suitably choosing the pressure value of compressed air, the machine weight will be practically reduced to zero to the aim of its handling, whereby the positioning obtained will be accurate because a fine adjustment of the correct position is made possible.

Another remarkable advantage consists in the fact that possible defects of the machine support plane are balanced by the swinging possibility of the disc-shaped body 30.

A further considerable advantage consists in the fact that the oscillations of said disc-shaped body 30 are elastically taken up by ring 38, whereby these movements of disc 30 have no influence on the machine.

It is clear finally that variations and/or modifications can be provided to the machine supporting composite foot according to the invention, without therefor exceeding the protective scope of the invention itself.

## Claims

1. A composite foot for supporting a machine, characterized by comprising a compressed air ejecting nozzle (12) fixed to the machine base (10) and connected to a suitable compressed air feeding source, to a portion of ejecting nozzle (12) projecting at the outside of base (10) there being applied in a swingable way a substantially disc-shaped body (30) for application to the support plane of the machine, between said disc-shaped body (30) and the machine base (10) there being provided resilient means (38) for allowing said swinging movements of disc-shaped body (30) and forming at the same time a sealing means for the compressed air, whereby the latter is exclusively directed toward the support plane of the machine.

2. A composite foot according to claim 1, characterized by the fact that the ejecting nozzle (12) comprises a threaded tail member (14) to be screwed in the machine base (10) and, within the latter, in a fitting (16) connected to a compressed air feed pipe (18).

3. A composite foot according to claim 2, characterized by the fact that the tail member (14) extend itself in a substantially cylindrical body (20), one face of which is in engagement with the outer surface of machine base (10), said body (20) having at the inside thereof a cavity (22) that receives compressed air from a longitudinal conduit (20) formed within the threaded tail (14), said cavity (22) being adapted to provide an expansion chamber of the compressed air from conduit (26).

4. A composite foot according to claim 3, characterized by the fact that the lower end of said substantially cylindrical body (20) shows a ring-shaped outer radial flange (28).

5. A composite foot according to claims 1 and 4, characterized by the fact that the disc-shaped body (30) is formed at one of its faces with a substantially cylindrical seat (32), the diameter and height of which are of slightly greater size than those of the outer radial flange (28) of cylindrical body (20), which consequently remains in any case at the inside of the seat (32).

6. A composite foot according to claim 5, characterized by the fact that the disc-shaped body (30) has on its other face a substantially cylindrical cavity (36) in which is partially housed a substantially ring-shaped body (38) of elastic material such as rubber or the like.

7. A composite foot according to claim 6 characterized by the fact that the outer diameter of the ring-shaped member (38) is slightly smaller than the diameter of cavity (36) of the disc-shaped body (30).

8. A composite foot according to claims 6 and 7 characterized by the fact that in any operating condition the ring-shaped member (38) is always in contact with both the base (10) and the disc-shaped body (30).

9. A composite foot according to claim 6, characterized by the fact that the disc-shaped body (30) has a recess (34) in which the cylindrical body (20) is inserted, the diameter of said recess (34) being slightly greater than the outer diameter of cylindrical body (20).

Fig.2

Fig.1

Fig.4

Fig.5

Fig.3

**European Patent Office**

# EUROPEAN SEARCH REPORT

Application Number

EP 90 83 0606

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-B-1257589 (DOUGLAS AIRCRAFT COMPANY) <br> * column 4, line 8 - column 5, line 3 * <br> * column 6, lines 1 - 34; figures 2, 4 * | 1-4 | B65G7/06 <br> B60V3/02 <br> B23Q1/26 <br> F16C29/02 <br> F16C32/06 |
| A |  | 5, 6, 9 |  |
| Y | US-A-3260322 (MACKIE) <br> * column 1, lines 45 - 49 * <br> * column 2, lines 8 - 72; figures 1-3 * | 1-9 |  |
| Y | GB-A-878818 (FORD MOTOR COMPANY) <br> * page 1, line 68 - page 2, line 40; figures 3, 5 * | 1-9 |  |
| A | US-A-3137530 (KOHLER) <br> * column 1, line 58 - column 2, line 49; figure 1 * | 1, 3-9 |  |
| A | US-A-3973810 (MORDECHAI MONTAG) <br> * column 1, line 60 - column 2, line 62; figure 1 * | 1, 4, 6-9 |  |

TECHNICAL FIELDS SEARCHED (Int. Cl.5 )

B65G
B60V
B23Q
F16C

The present search report has been drawn up for all claims

| Place of search | Date of completion of the search | Examiner |
|---|---|---|
| THE HAGUE | 02 APRIL 1991 | NEVILLE D.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)